(19) Europäisches Patentamt

European Patent Office

Office européen des brevets

(11) **EP 0 805 953 B1**

(12) **EUROPÄISCHE PATENTSCHRIFT**

(45) Veröffentlichungstag und Bekanntmachung des Hinweises auf die Patenterteilung:
**11.07.2001 Patentblatt 2001/28**

(51) Int Cl.⁷: **G01C 21/20**, G01C 22/02, G08G 1/133

(21) Anmeldenummer: **96937970.0**

(22) Anmeldetag: **27.11.1996**

(86) Internationale Anmeldenummer:
**PCT/CH96/00419**

(87) Internationale Veröffentlichungsnummer:
**WO 97/20190 (05.06.1997 Gazette 1997/24)**

(54) **VERFAHREN ZUR ORTUNG EINES FAHRZEUGS**

VEHICLE-LOCATING METHOD

PROCEDE DE LOCALISATION D'UN VEHICULE

(84) Benannte Vertragsstaaten:
**AT BE CH DE DK ES FI FR GB IT LI LU NL PT SE**

(30) Priorität: **29.11.1995 CH 338595**

(43) Veröffentlichungstag der Anmeldung:
**12.11.1997 Patentblatt 1997/46**

(73) Patentinhaber: **HÄNI PROLECTRON AG**
**CH-9552 Bronschhofen/Wil (CH)**

(72) Erfinder:
• **BORNHAUSER, Hans-Peter**
**CH-8570 Weinfelden (CH)**
• **FITZE, Ernst**
**CH-9225 Wilen Gottshaus (CH)**
• **GFELLER, Andreas**
**CH-8153 Rümlang (CH)**

(74) Vertreter: **Wächter, Roland et al**
**Siemens Schweiz AG**
**Patente,**
**Postfach**
**8047 Zürich (CH)**

(56) Entgegenhaltungen:
**DE-A- 3 326 539          FR-A- 2 466 815**

• **PATENT ABSTRACTS OF JAPAN vol. 013, no. 530 (P-966), 27.November 1989 & JP 01 217599 A (MITSUBISHI ELECTRIC CORP), 31.August 1989,**

**Beschreibung**

Die vorliegende Erfindung betrifft ein Verfahren nach dem Oberbegriff des Patentanspruchs 1.

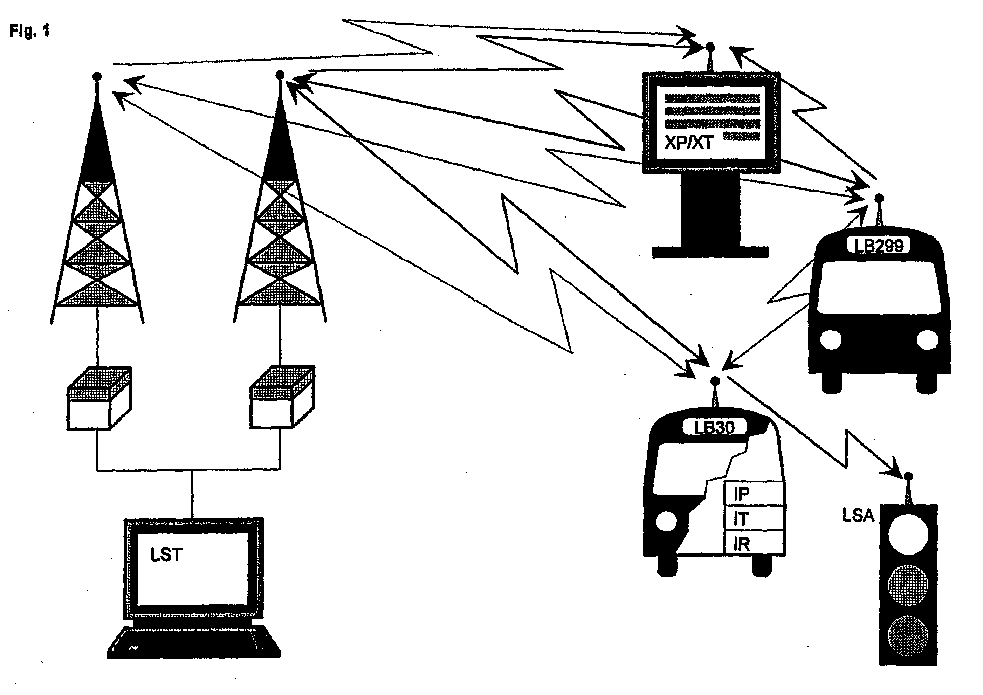

Zur Gewährleistung reibungsloser Abläufe in mittleren und grossen Verkehrsbetrieben, insbesondere im öffentlichen Personen-Nahverkehr (ÖPNV), werden moderne rechnergesteuerte Betriebsleitsysteme (RBL) eingesetzt, wie sie in "Moderne Betriebsleitsysteme auf Basis von Datenfunknetzen", Verkehr und Technik, Sonderdruck, Heft 12, Erich Schmidt Verlag, Berlin 1992 von Dr. J. Gehrig beschrieben sind. Die Kommunikation zwischen in Fig. 1 gezeigten Systemeinheiten eines modernen Betriebsleitsystems: der Leitstelle LST, den Fahrzeugen LB sowie dezentralen Steuergeräten, z.B. zur Beeinflussung von Lichtsignalanlagen LSA, die den Verkehrsfluss steuern, erfolgt normalerweise über Funk in Echtzeit. Die Datenübertragung von Punkt zu Punkt, z.B. von ortsfesten Streckenpunkten zu den Fahrzeugen LB, erfolgt oft über eine Infrarot-Verbindung. Zur Steuerung der peripheren Systemeinheiten LB, LSA, XP, XT und zur zyklischen Erfassung der aktuellen Betriebsdaten werden digitale Telegramme verwendet, die in analoge Signale umgewandelt (Modulation) und über wenigstens einen Datenkanal übertragen werden. Zur Optimierung der Abläufe innerhalb des Leitsystems werden dezentral vorhandene systemrelevante Informationen von der Leitstelle LST bevorzugt abgerufen und ausgewertet. Sowohl für die Leitstelle LST als auch für die in den betreffenden Fahrzeugen LB vorgesehenen Rechnersysteme ist die Kenntnis der genauen Position jedes Fahrzeuges LB von Bedeutung. Ein Ortungssystem, das präzise Daten bezüglich dem Standort des Fahrzeugs LB liefert, bildet die Voraussetzung für die ortsabhängige Abgabe von Fahrgastinformationen, die Steuerung von Lichtsignalanlagen LSA sowie für die Berechnung von Fahrplanabweichungen. Falls sich z.B. zwei Linienbusse (z.B. LB30 und LB299) einer Kreuzung annähern, kann ein an einer Kreuzung vorgesehener Rechner, der feststellt, welcher Linienbus LB die Kreuzung zuerst erreichen wird, die Lichtsignalanlage LSA derart steuern, dass beide Linienbusse LB30 und LB299 die Kreuzung mit möglichst geringer Verzögerung passieren können. Die Fahrzeugposition kann ferner als Eingangsgrösse für die Steuerung der in den einzelnen Fahrzeugen LB vorhandenen Ticketautomaten verwendet werden.

Mittels Satelliten oder Baken kann die Position eines Fahrzeugs LB in bekannter Weise mit minimalen Fehlerabweichungen ermittelt werden. Diese Ortungssysteme sind jedoch teuer und genügen nicht in jedem Fall den gestellten Anforderungen. Z.B. kann die Funkverbindung von bewegten Fahrzeugen LB zum Satelliten gelegentlich unterbrochen werden. Baken, die in hoher Zahl vorgesehen sein müssten, liefern nur punktuell genaue Positionsdaten.

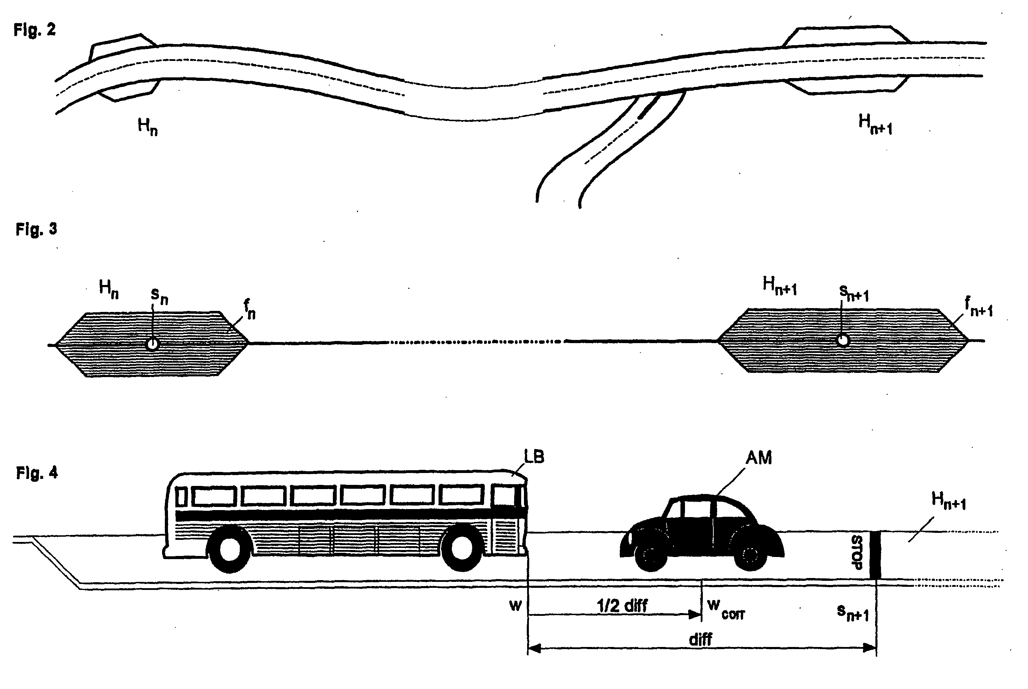

Bekannt ist ferner ein Verfahren, bei dem gemessene Wegdaten anhand der zu einem Strassenplan korrespondierenden Daten in der nachfolgend beschriebenen Weise korrigiert werden. Die Bestimmung der gefahrenen Distanz erfolgt durch den Bordrechner bevorzugt durch die Messung der Umdrehungen eines Rades mit bekanntem Durchmesser. Aufgrund von Schlupferscheinungen, Änderungen des Raddurchmessers oder aufgrund von Ausweich- oder Überholmanövern können über längere Distanzen grössere Abweichungen von der gemessenen zur tatsächlich zurückgelegten Distanz auftreten. Die gemessene Distanz muss daher regelmässig korrigiert werden. Wie in Fig. 2 und 3 gezeigt, ist in den abgespeicherten Daten zu diesem Zweck jeder Haltestelle H ein Sollhaltepunkt s sowie ein maximaler Fangbereich f fest zugeordnet. Jeder maximale Fangbereich f ist derart gewählt, dass dadurch der gemessene Wert w der zurückgelegten Wegstrecke unter Berücksichtigung der möglicherweise auftretenden Messfehler e immer erfasst wird, wenn das Fahrzeug LB an der betreffenden Haltestelle H hält. Falls das Fahrzeug LB innerhalb des Fangbereiches f hält, wird dies im Bordrechner als Halt an einer definierten Haltestelle H registriert. Der Messwert w, der z.B. auf die Front des Fahrzeugs LB bezogen wird, kann daher mit den Positionsdaten des zugehörigen im Speicher abgelegten Sollhaltepunkts s verglichen werden. Damit die Fehlabweichung des Messwertes w nicht übermässig gross werden und auch bei der nächsten Haltestelle H noch Innerhalb des Fangbereichs f liegen, wenn das Fahrzeug LB sich im Haltebereich d befindet, wird jeder Halt an einer Haltestelle zu einer Korrektur des Messwertes w verwendet. Dabei wird davon ausgegangen, dass das Fahrzeug immer nahe beim Sollhaltepunkt s anhält. Daher wird angenommen, dass die Abweichung des Messwertes w vom Sollhaltepunkt s im wesentlichen auf einer Fehlmessung beruht und dass die tatsächliche Position des Fahrzeugs etwa in der Mitte zwischen dem Messwert w und dem Sollhaltepunkt s liegt. Der Messwert w wird daher um die Hälfte der Differenz zwischen dem Messwert w und dem Distanzwert des Sollhaltepunktes s korrigiert.

Dieses Verfahren, bei dem die Maximalweiten der Fangbereiche f statisch festgelegt werden, weist wesentliche Nachteile auf. Der Fangbereich f ist ausschliesslich von der Wegstrecke abhängig, die ausgehend von der Stelle zurückgelegt wurde, an der der Messwert letztmals korrigiert wurde. Falls eine Korrektur z.B. durch eine Bake unmittelbar vor einer Haltestelle H vorgenommen wurde, ergibt sich bis zu dieser Haltestelle H ein sehr kleiner Fangbereich f, der leicht verfehlt wird, falls das Fahrzeug LB nicht nahe dem Sollhaltepunkt s anhält. Der Halt an der Haltestelle H wird durch den Fahrzeugrechner IR in diesem Fall nicht erkannt und muss durch den Fahrzeugführer daher manuell eingegeben werden. Die automatische Abgabe von Haltestellen-spezifischen Informationen, z.B. bezüglich der Anschlussverbindungen, erfolgt nicht. Zudem können beim Anhalten an Haltestellen (z.B. Fig. 2 und Fig. 4, Haltestelle $H_{n+1}$), die eine grosse Haltestellenlänge aufweisen, gravierende Fehler bei der Korrektur des Messwertes w entstehen. In der in Fig. 4 näher dargestellten Haltestelle $H_{n+1}$ ist ein Fahrzeug AM derart parkiert, dass das Fahrzeug LB nicht bis zum Sollhaltepunkt $s_{n+1}$ vorfahren kann. Der Fangbereich f kann daher wie oben beschrieben leicht verfehlt werden.

Falls der im Fahrzeug LB vorgesehene Bordrechner IR jedoch feststellt, dass der Halt innerhalb dem Fangbereich f erfolgt ist, wird dies als Halt an der Haltestelle $H_{n+1}$ registriert. Obwohl das Fahrzeug LB nicht zum Sollhaltepunkt s vorgefahren ist und der Messwert w die tatsächliche Position des Fahrzeugs LB präzise angibt, geht der Rechner IR davon aus, dass das Fahrzeug LB präzise beim Sollhaltepunkt $s_{n+1}$ angehalten hat. Der Messwert w wird daher um die Hälfte diff/2 der Differenz diff zwischen dem Messwert w und dem Distanzwert des Sollhaltepunktes $s_{n+1}$ korrigiert. Da der Messwert w ursprünglich korrekt war, wird durch die vermeintliche Korrektur an der Haltestelle $H_{n+1}$ ein Fehler eingeführt, der dem Wert diff/2 entspricht. Falls die nächste Haltestelle H nicht weit entfernt liegt und sich aufgrund der kurzen Wegstrecke daher nur ein kleiner Fangbereich f ergibt, führt diese Fehlkorrektur des Messwertes w mit grosser Wahrscheinlichkeit zu einem Verfehlen des Fangbereiches f. Der Messwert w, der nach dem bekannten Verfahren nur ungenau korrigiert wird, weist daher im bezug auf die tatsächliche Position des Fahrzeugs LB meist erhebliche Abweichungen auf. Dementsprechend lassen sich z.B. Ticketautomaten nicht mehr genau steuern, so dass eine korrekte Fahrtkostenberechnung nicht mehr gewährleistet ist. Die auftretenden Messfehler machen sich ferner auch bei der Steuerung des Verkehrs oder bei der Abgabe positionsgebundener Informationen störend bemerkbar. Z.B. werden Lichtsignalanlagen zu früh oder zu spät geschaltet oder es werden ortsabhängige Informationen an die sich im Fahrzeug LB befindenden Passagiere nicht rechtzeitig abgegeben. Haltestellen H werden oft nur detektiert, wenn die Fangbereiche f Maximalwerte angenommen haben. Dadurch steigt die Anzahl von Fehldetektionen, bei denen das Fahrzeug LB innerhalb eines Fangbereichs f, jedoch nicht innerhalb des zugehörigen Haltebereichs d einer Haltestelle H anhält, wonach das obenerwähnte Korrekturverfahren abläuft.

Nachteile des bekannten Verfahrens treten femer zutage, wenn das Streckennetz bereits geringfügig geändert wird. Die Maximalwerte der Fangbereiche f der Haltestellen H sind zu überprüfen und mit erheblichem Aufwand neu anzupassen.

Aus DE 33 26 539 A1 ist ein iteratives Verfahren zur Positionserkennung, und Positionsüberwachung bekannt, das es einem Fahrzeug ermöglicht, sich auf einer gegebenen Fahrstrecke selbst zu lokalisieren und die zu bedienenden Halestellen zu identifizieren. Die vom Fahrzeug zwischen zwei aufeinanderfolgenden Haltestellen durchfahrene Entfernung wird gemessen und mit den in Tabellenform gespeicherten Werten der bekannten Entfernungen automatisch analysiert.

Der vorliegenden Erfindung liegt daher die Aufgabe zugrunde, ein Verfahren anzugeben, durch die die Position von mit einem Wegdatenspeicher und einer Wegdatenmesseinheit versehenen Fahrzeugen präziser bestimmt werden kann. Fangbereiche sollen derart festgelegt werden, dass sie möglichst klein sind und trotzdem nicht verfehlt werden.

Diese Aufgabe wird durch die im Patentanspruch 1 angegebenen Massnahmen gelöst. Vorteilhafte Ausgestaltungen der Erfindung sind in weiteren Ansprüchen angegeben.

Durch die erfindungsgemässen Massnahmen werden die Bereiche berücksichtigt, innerhalb denen das Fahrzeug LB an den Haltestellen H anhält. Dadurch gelingt eine genauere Korrektur der Messwerte w. Insbesondere wird auch vermieden, dass Fangbereiche nicht angemessen festgelegt und dadurch bei einem Fahrzeughalt an einer Haltestelle verfehlt werden . Überschneidungen von Fangbereichen f und Fehldetektionen von Haltestellen H werden weitgehend vermieden. Änderungen des Streckennetzes können mit geringem Aufwand in das Ortungssystem übernommen werden. Die ermittelten Messwerte weisen im Normalfall eine höhere Genauigkeit auf.

Die Erfindung wird nachfolgend anhand von Zeichnungen beispielsweise näher erläutert. Dabei zeigt:

Fig. 1 ein modernes Kommunikationssystem,

Fig. 2 einen Auszug aus einem Streckennetz,

Fig. 3 im Speicher eines auf dem Streckennetz gemäss Fig. 2 verkehrenden Fahrzeugs abgelegte Daten, die Maximalwerte für die Fangbereiche enthalten,

Fig. 4 eine möglicherweise an einer Haltestelle auffretende Verkehrssituation und

Fig. 5 & 6 die erfindungsgemässe Festlegung eines Fangbereichs.

Fig. 1 zeigt, wie bereits oben erwähnt, ein modernes Betriebsleitsystem, das als zentrale Systemeinheit eine Leitstelle LST und als periphere Systemeinheiten eine grössere Anzahl von Fahrzeugen bzw. Linienbussen LB sowie Passagierinformationssysteme XP und Ticketautomaten aufweist. Jedes Fahrzeug LB (siehe Fig. 1, Fahrzeug LB30) weist dazu wenigstens einen intemen Rechner IR und vorzugsweise ein intemes Passagierinformationssystem IP sowie einen intemen Ticketautomaten IT auf. Zur zeitrichtigen Abgabe von Informationen, zur korrekten Berechnung der Fahrpreise bzw. zur optimalen Steuerung von Lichtsignalanlagen LSA benötigen diese Einheiten IP, IT, IR jeweils präzise Angaben bezüglich dem Standort des betreffenden Fahrzeuges LB. Die zurückgelegte Wegstrecke kann durch die Zählung der vollzogenen Umdrehungen eines Rades mit bekanntem Umfang nur ungenau gemessen werden. Die Korrektur der ermittelten Messwerte w nach den bekannten Verfahren führt nicht zu befriedigenden Ergebnissen.

Erfindungsgemäss wird jeder Haltestelle H ein Haltebereich d zugeordnet, der bei der Festlegung des Fangbereiches f berücksichtigt wird. Die Fangbereiche f aller Haltestellen H werden für jede Anfahrt individuell bestimmt und den konkret vorliegenden Umständen entsprechend bemessen. Dadurch werden die Gegebenheiten an Haitestellen H berücksichtigt, die das Korrekturverfahren beeinflussen können. Femer werden Abweichungen des Messwertes w berücksichtigt, die normalerweise proportional zur gefahrenen Wegstrecke ansteigen. Der Fangbereich f wird daher nach der Abfahrt von einer ersten Haltestelle $H_n$ jeweils für die nächste am Weg liegende Haltestelle $H_{n+1}$, $H_{n+2}$, ... neu berechnet. Bis zum Halt an einer Haltestelle H und der dort vollzogenen Korrektur des Messwertes w werden daher die Daten der ersten Haltestelle $H_n$ verwendet. Die Fangbereiche f der weiteren Haltestellen H werden nun ausgehend von dieser Haltestelle H ermittelt. Die Fangbereiche f für Haltestellen H, an denen das Fahrzeug LB nicht hält, werden im Rechner IR vorzugsweise ermittelt, damit ortsgebundene Informationen korrekt abgesetzt werden können; eine Korrektur beim Passieren von Fangbereichen f, innerhalb denen nicht angehalten wird, findet nicht statt. In verschiedenen Fahrzeugen LB werden vorzugsweise zusätzlich Fangbereiche f von Stellen ermittelt, an denen Informationen (Haltestellenansagen, etc.) abzugeben oder Aktivitäten (Abgabe von Steuersignalen an Lichtsignalaniagen LSA, Einschalten der Beleuchtung vor Tunnels, etc.) auszulösen sind.

Zur Festlegung des Fangbereiches f einer Haltestelle H werden verschiedene Angaben benötigt. Nach der Bestimmung eines Fahrweges für das Fahrzeug LB ist dieses am Sollhaltepunkt s der ersten Haltestelle H zu positionieren. Dieser Sollhaltepunkt s, der vorzugsweise immer in der Mitte des zugehörigen Haltebereiches d liegt, ist daher der Bezugspunkt für die Distanzmessung und die Festlegung der Fangbereiche f der Haitestellen H, die am gewählten Weg liegen. Aus dem Wegdatenspeicher des Fahrzeugrechners IR lassen sich nun die Haltebereiche $d_n$, $d_{n+1}$ sowie die Distanz D zwischen der ersten und der zweiten Haltestelle $H_n$, $H_{n+1}$ auslesen. Ausgelesen wird ferner der Genauigkeitsfaktor g des im Fahrzeug LB vorgesehenen Wegmessgerätes. Der Sollhaltepunkt s wird nur in einer bevorzugten Ausgestaltung der Erfindung im Wegdatenspeicher abgelegt. Anstelle der Haltebereiche d kann z.B. der Sollhaltepunkt s und die Haltestellenlänge abgelegt werden. Daraus kann der Haltestellenbereich d rechnerisch ermittelt werden. Bevorzugt wird im Fahrzeugrechner zusätzlich die Gesamtlänge des Fahrzeugs LB oder einer Fahlzeugkomposition abgelegt. In Kenntnis des Sollhaltepunktes s, der Haltestellenlänge und der Fahrzeuglänge kann der Haltebereich d noch genauer angegeben werden. Die Korrektur des Messwertes w erfolgt daher mit erhöhter Präzision. Nachstehend wird beschrieben, dass die Messwerte w bei der Korrektur an einer Haltestelle H jeweils an den Rand des Haltebereiches d verschoben werden, sofern die Messwerte w nicht innerhalb des Haltebereiches d liegen. Durch die Verwendung eines Sollwertes s kann der Messwert w auch korrigiert werden, falls er innerhalb des Haltebereiches d liegt (dazu wird der Messwert w um ein jeweils festzulegendes Mass, das vom Abstand zwischen dem Messwert w und dem Sollhaltepunkt s abhängt, gegen den Sollhaltepunkt s verschoben).

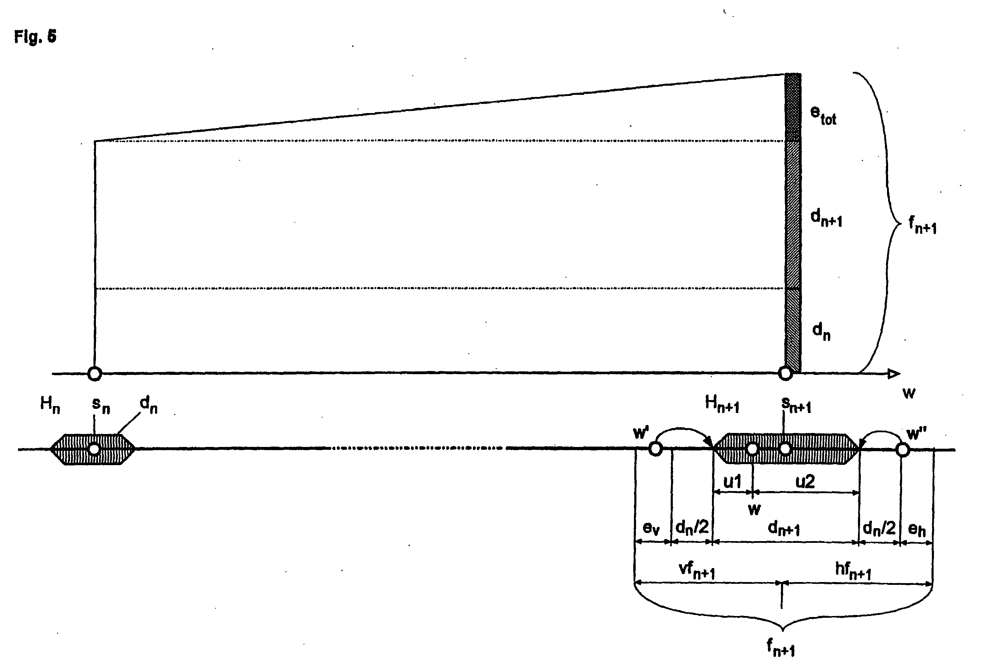

Gemäss Fig. 5 wird der Fangbereich $f_{n+1}$ der Haltestelle $H_{n+1}$ wie folgt festgelegt. Sofern die Fahrt des Fahrzeuges LB an der Haltestelle $H_n$ (Haltestellenmitte) beginnt, entsteht bei dieser ersten Haltestelle $H_n$ eine Abweichung zwischen dem Messwert w und der im Speicher für den Sollhaltepunkt $s_n$ abgelegten Position eine maximale Abweichung von plus und minus der Hälfte ($d_n/2$) des Haltebereiches $d_n$, die bei der Festlegung des Fangbereiches $f_{n+1}$ der nächsten Haltestelle $H_{n+1}$ zu berücksichtigen ist. Der Fangbereich $f_{n+1}$ vergrössert sich ferner um die Länge des Haltebereichs $d_{n+1}$ der nächsten Haltestelle $H_{n+1}$. Zu berücksichtigen ist femer die maximal mögliche Messabweichung e, die entlang der Strecke D zwischen den beiden Haltestellen $H_n$ und $H_{n+1}$ auftreten kann. Der Fangbereich $f_{n+1}$ wird daher wie folgt berechnet:

$$f_{n+1} = d_n + d_{n+1} + D^*g = d_n + d_{n+1} + e \qquad\qquad \text{Formel 1}$$

Der Fangbereichs $f_{n+1}$ wird gemäss Fig. 5 z.B. konzentrisch zum Haltebereich $d_{n+1}$ oder, sofern gespeichert, zum Sollhaltepunkt $s_{n+1}$ der Haltestelle $H_{n+1}$ gewählt. Die Messabweichung e wird in Fig. 5 in zwei gleiche Streckenteile $e_v$ und $e_h$ aufgeteilt.

Bevorzugt wird das Streckenteil $e_h$ nach dem Sollhaltepunkt $s_{n+1}$ jedoch grösser als das Streckenteil $e_v$ vor dem Sollhaltepunkt $s_{n+1}$ gewählt, da der Messwert w meist grösser als die gespeicherte Distanz D zwischen den betreffenden Haltestellen H wird. Dies ist beispielsweise der Fall, wenn ein erhöhter Radschlupf auftritt oder das Fahrzeug LB mehrere Baustellen umfahren muss. Daher werden zwei Genauigkeitsfaktoren $g_v$ und $g_h$ verwendet, die durch Versuche ermittelt werden. Der Fangbereich $vf_{n+1}$ vor dem Sollhaitepunkt $s_{n+1}$ setzt sich daher wie folgt zusammen:

$$vf_{n+1} = \frac{d_n}{2} + \frac{d_{n+1}}{2} + D^*g_v = \frac{d_n}{2} + \frac{d_{n+1}}{2} + e_v \qquad\qquad \text{Formel 2}$$

Der Fangbereich $hf_{n+1}$ hinter dem Sollhaltepunkt $s_{n+1}$ ist demgegenüber.

$$hf_{n+1} = \frac{d_n}{2} + \frac{d_{n+1}}{2} + D^*g_h = \frac{d_n}{2} + \frac{d_{n+1}}{2} + e_h \qquad \text{Formel 3}$$

Nach der Abfahrt von der Haltestelle $H_n$ wird durch den Fahlzeugrechner IR anhand der gespeicherten Daten des Streckennetzes daher der Fangbereich $f_{n+1}$ bzw. die Teilbereiche $vf_{n+1}$ und $hf_{n+1}$ der nächsten Haltestelle $H_{n+1}$ festgelegt. Ein Fahrzeughalt innerhalb der Zone, in der der gemessene Wert $w$ der zurückgelegten Wegstrecke innerhalb des Fangbereiches $f_{n+1}$ bzw. innerhalb der Teilbereiche $vf_{n+1}$ und $hf_{n+1}$ liegt, wird vom Rechner IR als Halt an der Haltestelle $H_{n+1}$ bewertet.

Um mögliche Fehldetektionen zu vermeiden, wird vorzugsweise nicht (nur) der Halt innerhalb eines Fangbereichs $f$, sondern die Freigabe der Fahrzeugtür als Kriterium für die Detektion einer Haltestelle H verwendet. Dadurch werden zufällige Halts innerhalb des Fangbereiches $f$, bei denen nicht an der Haltestelle H gestoppt und die Fahrzeughtür nicht freigegeben wird, nicht als Halt an der betreffenden Haltestelle H interpretiert. Hält das Fahrzeug ausserhalb des Fangbereichs $f$, handelt es sich um einen ausserordentlichen Haft, bei dem, ebenso wie bei der Durchfahrt an einer Haltestelle H, keine Korrekturen vorgenommen werden. Die Verwendung des Kriteriums "Freigabe der Fahrzeugtür" wird anstelle des Kriteriums "Öffnen der Fahrzeugtür" verwendet, weil an einer Haltestelle H unter Umständen gehalten wird, ohne dass Passagiere ein- oder aussteigen.

Falls der Rechner IR z.B. aufgrund eines Halts und gegebenenfalls der Freigabe der Fahrzeugtür innerhalb des Fangbereichs $f_{n+1}$ erkennt, dass sich das Fahrzeug LB an der Haltestelle $H_{n+1}$ befindet und der gemessene Wert $w$ der zurückgelegten Wegstrecke nicht innerhalb des Haltebereichs $d_{n+1}$ liegt, wird der Wert $w$ auf den näherliegenden Grenzwert des Haltebereichs $d_{n+1}$ korrigiert. Die Messabweichung $e$ wird nach jeder Korrektur des Messwertes $w$ bzw. nach jedem Halt an einer Haltestelle H auf null zurückgesetzt. In Fig. 5 ist diese Korrektur für möglicherweise auftretende Messwerte $w'$ und $w''$ gezeigt, die vor bzw. hinter dem Haltebereich $d_{n+1}$ liegen (die gezeigten Strecken $u2$ bzw. $u1$ sind in diesem Fall gleich null bzw. gleich $d_{n+1}$). Falls der Wert $w$ jedoch innerhalb des Haltebereichs $d_{n+1}$ liegt, werden beide Strekken $u2$ und $u1$, die den Haltebereich $d_{n+1}$ aufteilen, ungleich null. Eine Korrektur des Messwertes $w$ entfällt daher. Von Bedeutung ist die Position des Fahrzeuges LB innerhalb des Haltebereichs $d_{n+1}$ für die Festlegung des Fangbereiches $f_{n+2}$ für die nächste Haltestelle $H_{n+2}$. Die Formeln 1 bis 3 gelten daher nur für den Fall, dass das Fahrzeug LB von einer Starthaltestelle bzw. deren Sollhaltepunkt $s$ abgefahren ist. Mit $H_x$ als Haltestelle, an der der letzte Zwischenhalt eingelegt wurde und $H_y$ als Haltestelle, für die der Fangbereich $f_y$ festzulegen ist, gelten daher die nachstehenden Formeln. Der Fangbereich $vf_y$ vor dem Sollhaltepunkt $s_y$ ist:

$$vf_y = u2_x + \frac{d_y}{2} + D^*g_v = u2_x + \frac{d_y}{2} + e_v \qquad \text{Formel 4}$$

Der Fangbereich $hf_y$ hinter dem Sollhaltepunkt $s_y$ ist demgegenüber:

$$hf_y = u1_x + \frac{d_y}{2} + D^* g_h = u1_x + \frac{d_y}{2} + e_h \qquad \text{Formel 5}$$

$u1_x$ entspricht dabei der Strecke, um die der Messwert $w$ gegenüber der Position des Fahrzeuges LB maximal vorausliegt. Demzufolge ist der Fangbereich $hf_y$ hinter dem Sollhaltepunkt $s_y$ unter Berücksichtigung von $u1_x$ festzulegen. $u2_x$ entspricht der Strecke, um die der Messwert $w$ gegenüber der Position des Fahrzeuges LB maximal zurückliegt. Demzufolge ist der Fangbereich $vf_y$ vor dem Sollhaltepunkt $s_y$ unter Berücksichtigung von $u2_x$ festzulegen.

Bei einem Halt innerhalb des Fangbereiches $f$ wird die obenerwähnte Korrektur des Messwertes $w$ sowie die Rückstellung der Messabweichung $e$ bewirkt. Bei mehrfachen Halts innerhalb eines Fangbereichs $f$ erfolgt ebenfalls die obenerwähnte Korrektur. Normalerweise liegt der Messwert $w$ beim zweiten Halt, wie In Fig. 5 für den Messwert $w''$ gezeigt, hinter dem Haltebereich $d$, aber noch immer im Fangbereich $f$. Der Messwert $w$ wird daher (wie in Fig. 5 für den Messwert $w''$ gezeigt) auf den korrespondierenden Grenzwert des Haltebereichs $d$ zurückgesetzt.

Passiert das Fahrzeug LB eine Bake, sucht der Rechner IR in der gewählten Route deren Position und korrigiert den Messwert $w$ entsprechend und setzt die Messabweichung $e$ auf null zurück. Der Fangbereich $f$ kann aufgrund der präzise bekannten Ausgangsposition des Fahrzeuges LB noch enger festgelegt werden. Der Fangbereich $vfy$ vor dem Sollhaltepunkt $s_y$ ist daher:

$$vf_y = \frac{d_y}{2} + D^*g_v = \frac{d_y}{2} + e_v \qquad \text{Formel 6}$$

Der Fangbereich hf$_y$ hinter dem Sollhaltepunkt s$_y$ ist demgegenüber

$$hf_y = \frac{d_y}{2} + D^*g_h = \frac{d_y}{2} + e_h \qquad \text{Formel 7}$$

Kann die aktuelle Position des Fahrzeugs LB mittels Satellitenortung (GPS) bestimmt werden, so wird die Messabweichung e auf null zurückgesetzt. Die Genauigkeit dieser Messung liegt im Bereich u von einigen Metem. Dieser Bereich u ist bei der Festlegung der Fangbereiche f zu berücksichtigen:
Der Fangbereich vf$_y$ vor dem Sollhaltepunkt s$_y$ ist daher:

$$vf_y = \frac{u}{2} + \frac{d_y}{2} + D^*g_v = \frac{u}{2} + \frac{d_y}{2} + e_v \qquad \text{Formel 6a}$$

Der Fangbereich hf$_y$ hinter dem Sollhaltepunkt s$_y$ ist demgegenüber:

$$hf_y = \frac{u}{2} + \frac{d_y}{2} + D^*g_h = \frac{u}{2} + \frac{d_y}{2} + e_h \qquad \text{Formel 7a}$$

D ist dabei die Distanz zwischen der Bake oder der Stelle an der die Satellitenortung erfolgte und dem dem Haltebereich d bzw. dem Sollhaltepunkt s$_y$ der Haltestelle H, für die der Fangbereich f festgelegt wird.

Die Genauigkeit der Korrektur des Messwertes w hängt primär von der Grösse des Haltebereichs d ab. Der Haltebereich d ist daher möglichst klein gegenüber der Länge der Haltestelle H zu wählen. Dies ist möglich, falls die Länge des Fahrzeuges LB bekannt ist. Der Haltebereich d entspricht daher der Differenz zwischen der Länge der Haltestelle H und der Länge des Fahrzeuges LB. Die Fahrzeuglänge kann daher individuell berücksichtigt werden.

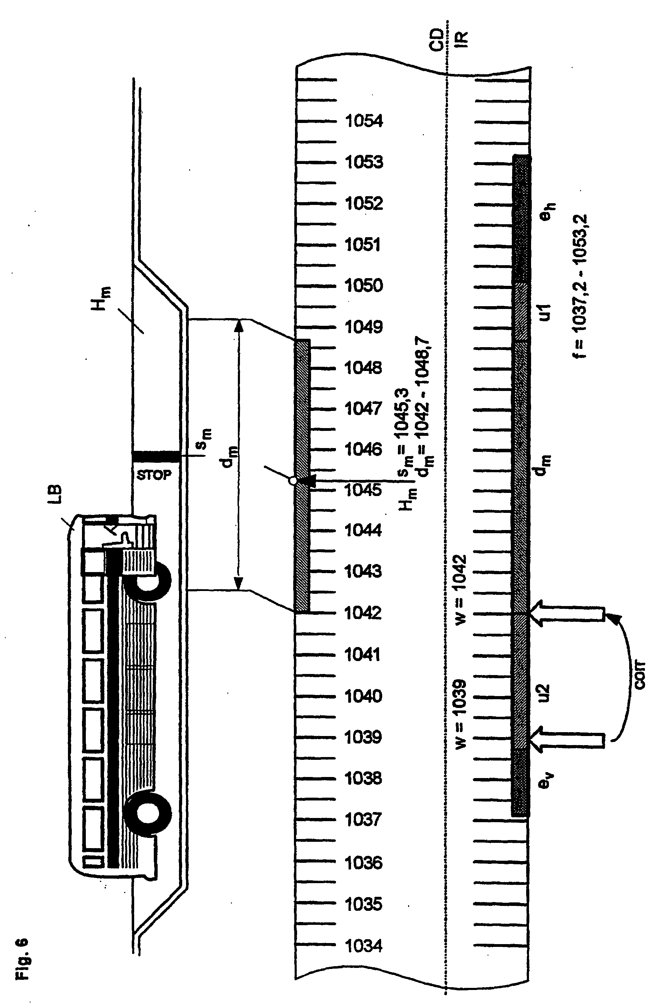

In Fig. 6 ist die erfindungsgemässe Korrektur des Messwerts w an einer Haltestelle H$_m$ dargestellt. Gemessen und eingezeichnet sind der Sollhaltepunkt s$_m$ sowie der Haltebereich d$_m$, deren Daten auf ein Speichermedium CD abgelegt sind. Der Sollhaltepunkt s$_m$ liegt bei 1045,3m. Der Haltebereich d$_m$ beginnt bei 1042m und endet bei 1048,7m. Diese Daten der Haltestelle H$_m$ sind vom Speichermedium CD im Fahrzeug LB durch den Rechner IR abrufbar. Die gespeicherten Daten sollen dabei möglichst gut mit den tatsächlichen Verhältnissen übereinstimmen. Aufgrund von Messabweichungen und baulichen Veränderungen der Fahrbahn können in der Praxis durchaus Abweichungen entstehen. Anhand der im Speichermedium CD versorgten Daten der Haltestelle H$_m$, den von der früheren Haltestelle H möglicherweise übemommenen Fehlern u1 und u2 sowie den Messabweichungen e$_v$ und e$_h$ wird vom Rechner IR der Fangbereich f für die Haltestelle H$_m$ festgelegt, der zwischen den Grenzwerten 1037m und 1053m liegt. Beim Anhalten des Fahrzeugs sowie vorzugsweise zusätzlich beim der Freigabe der Fahrzeugtür wird vom Rechner IR festgestellt, dass der ermittelte Messwert w bei 1039m und somit innerhalb des Fangbereichs f$_m$, aber ausserhalb des Haltebereichs d$_m$ liegt. Der Rechner IR korrigiert daher den Messwert w und setzt den Zähler des Messgerätes an den Rand des Haltebereiches d$_m$ bzw. auf den Stand 1042m.

Anstelle des Haltebereiches d$_m$ (z.B. Beginn bei 1042 m und Ende bei 1048,7 m) kann auch die Haltestellenlänge (z.B. Beginn bei 1035 m und Ende bei 1050 m) und die Fahrzeuglänge abgespeichert werden. Der Fahrzeugrechner IR kann daher aus der Differenz dieser beiden Längenangaben den Haltebereich d$_m$ ermitteln.

Ferner kann ein Sollhaltepunkt s sowie die zugehörige Länge des Haltebereiches d (z.B. 6 m) oder die Haltestellenlänge (z.B. 15 m) und die Fahrzeuglänge (z.B. 9 m) abgelegt sein. Dadurch lassen sich die Eckpunkte des Haltebereiches d jeweils präzise bestimmen (z.B. wird festgelegt, dass der Sollhaltepunkt s immer in der Mitte oder am Ende des Haltebreiches d liegt).

Mit dem erfindungsgemässen Verfahren können natürlich auch andere Massnahmen zur Korrektur des Messwertes w angewendet werden, wenn das Fahrzeug LB innerhalb eines Fangbereiches hält. Wesentlich ist, dass die Korrektur in Richtung zum Sollhaltepunkt s erfolgt. Sofern Sollhaltepunkte s abgelegt sind, kann eine Korrektur auch dann erfolgen, wenn der Messwert w innerhalb dem Haltebereich d liegt

Für verschiedene Fahrzeuge LB und/oder verschiedene Streckenabschnitte können zudem entsprechend angepasste Genauigkeitsfaktoren g bzw. g$_v$ und g$_h$ festgelegt werden.

Der Rechner IR stellt femer bevorzugt fest, ob sich die Fangbereiche f von zwei Haltestellen H überschneiden. Falls ein Fahrzeughalt, gegebenenfalls mit Türfreigabe, im Schnittbereich beider Fangbereiche f$_n$ bzw. f$_{n+1}$ erfolgt, wird dies dem Fahrzeugführer gemeldet, so dass eine manuelle Korrektur erfolgen kann.

Bei mehrmaligen Halts innerhalb des Haltebereichs d einer Haltestelle H kann die maximal mögliche Messabweichung u2 und in besonderen Fällen auch die Messabweichung u1 reduziert werden. Hält das Fahrzeug wie in Fig. 5 gezeigt an der Haltestelle $H_{n+1}$ und liegt der gemessene Wert w innerhalb des Haltebereichs d so erfolgt keine Korrektur des Wertes w. Die genaue Position des Fahrzeugs innerhalb des Haltebereichs d ist Jedoch nicht bekannt. Die exakte Position des Fahrzeugs kann vom gemessenen Wert w um die möglichen Messabweichungen u1 und u2 abweichen. Die mögliche Messabweichung u1 entspricht der Differenz des gemessenen Wertes w und dem Wert des Startpunktes des Haltebereichs d. Die mögliche Messabweichung u2 entspricht der Differenz des gemessenen Wertes w und dem Wert des Endpunktes des Haltebereichs d. Mit Jedem Vorrücken des Fahrzeugs reduziert sich die mögliche Messabweichung u2 um das zusätzlich gefahrene Wegstück. Spfem der gemessene Wert w beim Vorrücken des Fahlzeugs innerhalb des Haltebereichs d über den Wert des Endpunktes des Haltebereichs d hinausiäuft, reduziert sich die mögliche Messabwelchung u1 entsprechend. Falls beim ersten Halt eine mögliche Messabweichung u1 von z.B. 3,5 Metern festgestellt wurde und der gemessene Wert w beim Vorrücken des Fahrzeugs bis zum nächsten Halt um 3,5 Meter über den Wert des Endpunktes des Haltebereichs d hinausgelaufen ist, reduziert sich die möglich Messabweichung u2 auf null. Das Fahrzeug steht somit exakt auf dem Endpunkt des Haltebereichs d. Der Wert w wird, sobald er den Wert des Endpunktes des Haltebereichs d überschritten hat, jeweils auf den Wert des Endpunktes des Haltebereichs d zurückgesetzt. Die mögliche Messabweichung u2 erreicht bereits dann den Wert null, wenn der gemessene Wert w den Wert des Endpunktes des Haltebereichs d erreicht. Durch das Vorrücken des Fahrzeuges innerhalb des Haltebereichs d können daher die möglichen Messabweichungen u1, u2 reduziert werden, so dass sich der Fangbereich f für die nächste Haltestelle entsprechend reduziert.

**Patentansprüche**

1. Verfahren zur kontinuierlichen Ortung von Fahrzeugen (LB), die einen Rechner (IR) enthalten, der mit einer Wegdatenmesseinheit, die einen der zurückgelegten Wegstrecke entsprechenden Messwert w abgibt, und mit einem Wegdatenspeicher (CD) verbunden ist, in dem das zu befahrende Streckennetz, die Position von Haltestellen (H) sowie deren gegenseitige Distanzen D abgelegt sind, wobei den Haltestellen (H) Haltebereiche (d) zugeordnet sind, die im Wegdatenspeicher (CD) abgelegt sind oder anhand zusätzlich abgelegter den Haltestellen (H) zugehöriger Daten, wie Sollhaltepunkten (s) und der Haltestellenlängen, berechnet werden, dass die Messung an einer ersten Haltestelle ($H_x$) begonnen wird, an der das Fahrzeug (LB) innerhalb des Haltebereiches $d_x$ positioniert ist und die Wegdatenmesseinheit aufgrund früherer Messungen oder einer Neueingabe einen Messwert w aufweist, der innerhalb des Haltebereiches $d_x$ liegt, **dadurch gekennzeichnet**, dass der Rechner (IR) einen Fangbereich fy einer nächsten Haltestelle ($H_y$) festlegt, indem die Haltebereiche $d_x$, $d_y$ der beiden Haltestellen ($H_x$ und $H_y$) sowie eine Messabweichung e addiert, die sich durch die Multiplikation der Distanz D zwischen den Haltestellen ($H_x$ und $H_y$) mit wenigstens einem zur Wegdatenmessung korrespondierenden Genauigkeitsfaktor g ergibt:

$$f_y = d_x + d_y + D^*g = d_x + d_y + e,$$

dass bei einem Fahrzeughalt, während dem der Messwert w innerhalb dem Fangbereich $f_y$ liegt, der Rechner (IR) feststellt, dass die Haltestelle ($H_y$) erreicht wurde, dass die Messabweichung e auf null zurückgesetzt wird und dass der Messwert w, sofern er ausserhalb des Haltebereichs dy liegt, in Richtung zum Haltebereich $d_y$ korrigiert wird.

2. Verfahren nach Anspruch 1, **dadurch gekennzeichnet**, dass der Fangbereich $f_y$ in einen vor und einen hinter dem Sollhaltepunkt $s_y$ liegenden Fangbereich $vf_y$ bzw. $hf_y$ aufgeteilt wird, dass für jeden der Fangbereiche $vf_y$ bzw. $hf_y$ ein Genauigkeitsfaktor $g_v$ bzw. $g_h$ sowie eine von der vorgehenden Haltestelle ($H_x$) übemommene maximal mögliche Messabweichung $u2_x$ bzw. $u1_x$ berücksichtigt wird, die den durch den Messwert w getrennten Teilen des Haltebereiches $d_x$ der vorhergehenden Haltestelle ($H_x$) entsprechen:

$$d_x = u1_x + u2_x;$$

$$vf_y = u2_x + \frac{d_y}{2} + D^*g_v = u2_x + \frac{d_y}{2} + e_v ;$$

$$hf_y = u1_x + \frac{d_y}{2} + D^*g_h = u1_x + \frac{d_y}{2} + e_h$$

3. Verfahren nach Anspruch 1 oder 2, **dadurch gekennzeichnet**, dass der Messwert w, sofem er ausserhalb des Haltebereichs $d_y$ liegt, auf den näherliegenden Grenzwert des Haltebereiches $d_y$ gesetzt wird oder dass der Messwert w, sofern er innerhalb des Haltebereichs $d_y$ liegt, in Abhängigkeit der Differenz zwischen dem Messwert w und der Position des Sollhaltepunktes $s_y$ gegen den Sollhaltepunkt $s_y$ verschoben wird.

4. Verfahren nach Anspruch 1, 2 oder 3, **dadurch gekennzeichnet**, dass für verschiedene Fahrzeuge (LB) und/oder Streckenbereiche verschiedene Grenzwerte g bzw. $g_v$ und $g_h$ verwendet werden.

5. Verfahren nach einem der Ansprüche 1 - 4, **dadurch gekennzeichnet**, dass die Korrekturmassnahmen für jeden Halt innerhalb des Fangbereichs f einer Haltestelle (H) vollzogen werden.

6. Verfahren nach einem der Ansprüche 1 - 5, **dadurch gekennzeichnet**, dass die Korrekturmassnahmen erst nach der Freigabe einer Fahrzeugtür vollzogen werden.

7. Verfahren nach einem der Ansprüche 1 - 6, **dadurch gekennzeichnet**, dass beim Passieren einer Bake die Messabweichung e bzw. $e_v$ und $e_h$ und die maximal mögliche Messabweichung u bzw. $u2_x$ und $u1_x$ auf null gesetzt werden, so dass der Fangbereich $f_y$ der nächsten Haltestelle ($H_y$) mit der Distanz D gemessen ab der Bake wie folgt festgelegt wird:

$$vf_y = \frac{d_y}{2} + D{*}g_v = \frac{d_y}{2} + e_v \; ;$$

$$hf_y = \frac{d_y}{2} + D{*}g_h = \frac{d_y}{2} + e_h$$

8. Verfahren nach einem der Ansprüche 1 - 6, **dadurch gekennzeichnet**, dass bei der Bestimmung der Position des Fahrzeugs (LB) mittels Satellit die Messabweichung e bzw. $e_v$ und $e_h$ auf null gesetzt wird, so dass unter Berücksichtigung der maximal möglichen Messabweichung u der Fangbereich $f_y$ der nächsten Haltestelle ($H_y$) mit der Distanz D gemessen ab der Stelle, an der die Satellitenortung erfolgte, wie folgt festgelegt wird :

$$vf_y = \frac{u}{2} + \frac{d_y}{2} + D{*}g_v = \frac{u}{2} + \frac{d_y}{2} + e_v$$

$$hf_y = \frac{u}{2} + \frac{d_y}{2} + D{*}g_h = \frac{u}{2} + \frac{d_y}{2} + e_h.$$

9. Verfahren nach einem der Ansprüche 1 - 8, **dadurch gekennzeichnet**, dass Fangbereiche f für weitere Streckenpunkte, insbesondere für solche, an denen Informationen an die Passagiere oder Steuersignale an Lichtsignalanlagen (LSA) abzugeben oder Aktivitäten auszulösen sind, festgelegt werden.

10. Verfahren nach einem der Ansprüche 1 - 8, **dadurch gekennzeichnet**, dass der Haltebereich d anhand des abgelegten Sollhaltepunktes s, der Haltestellenlänge und/oder der Fahrzeuglänge berechnet wird.

11. Verfahren nach einem der Ansprüche 1 - 8, **dadurch gekennzeichnet**, dass der Rechner (IR) feststellt, ob sich die Fangbereiche f von zwei Haltestellen (H) überschneiden, und dem Fahrzeugführer meldet, falls ein Fahrzeughalt, gegebenenfalls mit Türfreigabe, im Schnittbereich beider Fangbereiche f erfolgt, so dass eine manuelle Korrektur erfolgen kann.

12. Verfahren nach einem der Ansprüche 1 - 11, **dadurch gekennzeichnet**, dass beim Vorrücken innerhalb des Haltebereichs d einer Haltestelle (H) die möglicherweise vorhandenene Messabweichung u2 und, sobald der gemessene Wert w über den Wert des Endpunktes des Haltebereichs d hinausläuft, die möglicherweise vorhandenene Messabweichung u1 entsprechend der vorgerückten Strecke reduziert wird.

**Claims**

1. Method for continuous location of vehicles (LB), which contain a computer (IR) which is connected to a route data measuring unit, which outputs a measured value w corresponding to the route section covered, and to a route data memory (CD) in which the route network to be covered, the position of stopping points (H) as well as the mutual distances D are stored, with stopping areas d being allocated to stopping points (H) that are stored in the route data memory (CD) or are calculated using additional stored data referring to the stopping points (H), such as set stopping points (s) and the stopping point lengths, with the measurement being started at a first stopping point ($H_x$) at which the vehicle (LB) is positioned within the stopping area $d_x$ and the route data measuring unit having a measured value w based on previous measurements or a new input, which lies within the stopping area $d_x$, characterised in that the computer (IR) stipulates a capture area $f_y$ of a next stopping point ($H_y$), in that the stopping areas $d_x$, $d_y$ of both stopping points ($H_x$ and $H_y$) as well as a measurement error e are added, which by multiplication of the distance D between the stopping points ($H_x$ and $H_y$) with at least one accuracy factor g corresponding to the route data measurement produces:

$$f_y = d_x + d_y + D^*g = d_x + d_y + e,$$

that at a vehicle stop during which the measured value w lies within the capture area $f_y$, the computer (IR) determines that the stopping point ($H_y$) was reached, that the measurement error e is reset to zero and the measured value w is, if it lies outside the stopping area $d_y$, corrected in the direction of the stopping area $d_y$.

2. Method in accordance with claim 1, characterised in that the capture area $f_y$ is divided into a stopping area $vf_y$ and/ or $hf_y$ located before and after the set stopping point $s_y$, and that for each of the stopping areas $vf_y$ or $hf_y$ an accuracy factor $g_v$ or $g_h$ as well as a maximum possible measurement error $u2_x$ or $u1_x$ taken from the proceeding stopping point ($H_x$) are taken into account, which correspond to the parts of the stopping area $d_x$ of the previous stopping point ($H_x$) divided by the measured value w:

$$d_x = u1_x + u2_x \;;$$

$$vf_y = u2_x + \frac{d_y}{2} + D^*g_v = u2_x + \frac{d_y}{2} + e_v \;;$$

$$hf_y = u1_x + \frac{d_y}{2} + D^*g_h = u1_x + \frac{d_y}{2} + e_h$$

3. Method in accordance with claims 1 or 2, characterised in that the measured value w, if it lies outside the stopping area $d_y$, is set to the nearest limit value of the stopping area $d_y$ or that the measured value w, provided it lies within the stopping area $d_y$, is displaced with respect to the set stopping point $s_y$ relative to the difference between the measure value w and the position of the set stopping point $s_y$.

4. Method in accordance with claims 1, 2 or 3, characterised in that different limit values g or $g_v$ and $g_h$ are used for different vehicles (LB) and/or route areas.

5. Method in accordance with one of claims 1 to 4, characterised in that the correction measures are carried out for each stop within the capture area f of a stopping point (H).

6. Method in accordance with one of claims 1 to 5, characterised in that the correction measures are not carried out until after a vehicle door has been released.

7. Method in accordance with one of claims 1 to 6, characterised in that the when passing a beacon the measurement error e or $e_v$ and $e_h$ and the maximum possible measurement error u or $u2_x$ and $u1x_x$ are set to zero, so that the capture area $f_y$ of the next stopping point ($H_y$) with the distance D measured from the beacon is determined as follows.

**EP 0 805 953 B1**

$$vf_y = \frac{d_y}{2} + D^*g_v = \frac{d_y}{2} + e_v \, ;$$

$$hf_y = \frac{d_y}{2} + D^*g_h = \frac{d_y}{2} + e_h$$

8. Method in accordance with one of claims 1 to 6, characterised in that when determining the position of the vehicle (LB) by means of a satellite, the measurement error e or $e_v$ and $e_h$ is set to zero so that taking account of the maximum possible measurement error u, the capture area $f_y$ of the next stopping point ($H_y$) with the distance D measured from the point at which the satellite location takes place, is specified as follows.

$$vf_y = \frac{u}{2} + \frac{d_y}{2} + D^*g_v = \frac{u}{2} + \frac{d_y}{2} + e_v \, ;$$

$$hf_y = \frac{u}{2} + \frac{d_y}{2} + D^*g_h = \frac{u}{2} + \frac{d_y}{2} + e_h$$

9. Method in accordance with one of claims 1 to 8, characterised in that capture areas f are specified for further route points, particularly for those at which information is to be given to passengers or control signals applied to traffic light systems (LSA) or activities initiated.

10. Method in accordance with one of claims 1 to 8, characterised in that the stopping area d is calculated using the stored set stopping point s, the stopping point length and/or the vehicle length.

11. Method in accordance with one of claims 1 to 8, characterised in that the computer (IR) determines whether the capture areas f of two stopping points (H) overlap and signals to the vehicle driver if a vehicle stop, if necessary with a door release, takes place in the overlap area of two capture areas f, so that a manual correction can take place.

12. Method in accordance with one of claims 1 to 11, characterised in that when moving forward within the stopping area d of a stopping point (H) the possible existing error of measurement u2 and, if the measured value w exceeds the value of the end point of the stopping area d, the possible existing measurement error u1 is reduced corresponding to the distance moved forward.

**Revendications**

1. Procédé de localisation continue de véhicules (LB) automobiles qui contiennent un ordinateur (IR) qui est relié à une unité de mesure de données de parcours qui fournit une valeur w de mesure correspondant au trajet parcouru, et à une mémoire(CD) de données de parcours dans laquelle sont mémorisés le réseau de réseau de voies à parcourir, la position de points (H) d'arrêt, ainsi que leurs distances D mutuelles, des zones (d) d'arrêt, qui sont mémorisées dans la mémoire (CD) de données de parcours ou qui sont calculées à l'aide de données mémorisées en plus, associées aux points (H) d'arrêt, tels que des points (s) d'arrêt de consigne et les longueurs des points d'arrêt, étant associées aux points (H) d'arrêt, la mesure étant commencée en un premier point ($H_x$) d'arrêt sur lequel le véhicule (LB) automobile est positionné à l'intérieur de la zone $d_x$ d'arrêt et l'unité de mesure de données de parcours comportant sur la base de mesures antérieures ou d'une nouvelle entrée une valeur w de mesure qui se trouve à l'intérieur de la zone $d_x$ d'arrêt, caractérisé en ce que l'ordinateur (IR) fixe une zone $f_y$ d'interception d'un point ($H_y$) d'arrêt suivant en additionnant les zones $d_x$, $d_y$ d'arrêt des deux points ($H_x$ et $H_y$) d'arrêt ainsi qu'un écart e de mesure qui est obtenu par la multiplication de la distance D entre les points ($H_x$ et $H_y$) d'arrêt par au moins un facteur g de précision correspondant à la mesure de données de parcours :

$$f_y = d_x + d_y + D^*g = d_x + d_y + e,$$

en ce que, lors d'une halte du véhicule automobile, pendant laquelle la valeur w de mesure se trouve à l'intérieur de la zone $f_y$ d'interception, l'ordinateur (IR) constate que le point ($H_y$) d'arrêt a été atteint, en ce que l'écart de mesure est ramené à zéro et en ce que la valeur w de mesure est corrigée en direction de la zone $d_y$ d'arrêt dans la mesure où elle se trouve à l'extérieur de la zone $d_y$ d'arrêt.

2. Procédé suivant la revendication 1, caractérisé en ce que la zone $f_y$ d'interception est subdivisée en une zone $vf_y$ d'interception se trouvant avant le point $s_y$ de consigne et en une zone $hf_y$ d'arrêt se trouvant après le point $s_y$ de consigne, en ce qu'il est pris en compte pour chacune des zones $vf_y$ et $hf_y$ d'interception un facteur $g_v$ respectivement $g_h$ de précision ainsi qu'un écart $u2_x$ respectivement $u1_x$ de mesure possible au maximum, qui est pris en charge par le point d'arrêt précédent et qui correspond aux parties séparées par la valeur w de mesure de la zone $d_x$ d'arrêt du point ($H_x$) d'arrêt précédent :

$$d_x = u1_x + u2_x \;;$$

$$vf_y = u2_x + \frac{d_y}{2} + D^*g_v = u2_x + \frac{d_y}{2} + e_v \;;$$

$$hf_y = ul_x + \frac{d_y}{2} + D^*g_h = ul_x + \frac{d_y}{2} + e_h$$

3. Procédé suivant la revendication 1 ou 2, caractérisé en ce que la valeur w de mesure est, dans la mesure où elle se trouve à l'extérieur de la zone $d_y$ d'arrêt, mise à la valeur limite la plus proche de la zone $d_y$ d'arrêt ou en ce que la valeur w de mesure est, dans la mesure où elle se trouve à l'intérieur de la zone $d_y$ d'arrêt, décalée vers le point $s_y$ d'arrêt de consigne en fonction de la différence entre la valeur w de mesure et la position du point $s_y$ d'arrêt de consigne.

4. Procédé suivant la revendication 1, 2 ou 3, caractérisé en ce qu'on utilise diverses valeurs g ou $g_v$ et $g_h$ pour divers véhicules (LB) automobiles et/ou diverses zones de voies.

5. Procédé suivant l'une des revendications 1 à 4, caractérisé en ce que les mesures de correction sont accomplies pour chaque halte à l'intérieur de la zone f d'interception d'un point (H) d'arrêt.

6. Procédé suivant l'une des revendications 1 à 5, caractérisé en ce que les mesures de correction ne sont accomplies qu'après la libération d'une porte du véhicule automobile.

7. Procédé suivant l'une des revendications 1 à 6, caractérisé en ce que, lors du passage d'un indicateur de distance, l'écart e ou $e_v$ et $e_h$ de mesure et l'écart u ou $u2_x$ et $u1_x$ de mesure possible maximum sont mis à zéro, si bien que la zone $f_y$ d'interception du point $h_y$ d'arrêt suivant est mesurée comme suit avec la distance D mesurée à partir de l'indicateur de distance :

$$vf_y = \frac{d_y}{2} + D^*g_v = \frac{d_y}{2} + e_v \;;$$

$$hf_y = \frac{d_y}{2} + D^*g_h = \frac{d_y}{2} + e_h$$

8. Procédé suivant l'une des revendications 1 à 6, caractérisé en ce que, lors de la détermination de la position du véhicule (LB) automobile au moyen d'un satellite, l'écart e ou $e_v$ et $e_h$ de mesure est mis à zéro, si bien que, en tenant compte de l'écart u de mesure possible maximum, la zone $f_y$ d'interception du point ($H_y$) d'arrêt suivant est fixée comme suit avec la distance D mesurée à partir du point auquel la localisation par satellite s'est effectuée :

$$vf_y = \frac{u}{2} + \frac{d_y}{2} + D^*g_v = \frac{u}{2} + \frac{d_y}{2} + e_v \; ;$$

$$hf_y = \frac{u}{2} + \frac{d_y}{2} + D^*g_h = \frac{u}{2} + \frac{d_y}{2} + e_h$$

9. Procédé suivant l'une des revendications 1 à 8, caractérisé en ce qu'il est fixé des zones f d'interception pour des points de voies supplémentaires, notamment pour ceux auxquels des informations sont à fournir aux passagers ou des signaux de commande sont à fournir à des installations LSA de signalisation lumineuses ou auxquels des activités sont à déclencher.

10. Procédé suivant l'une des revendications 1 à 8, caractérisé en ce que la zone d d'arrêt est calculée à l'aide du point s d'arrêt de consigne mémorisé, de la longueur du point d'arrêt et/ou de la longueur du véhicule automobile.

11. Procédé suivant l'une des revendications 1 à 8, caractérisé en ce que l'ordinateur (1R) constate si les zones f d'interception de deux points (H) d'arrêt se recoupent et le signal au conducteur du véhicule automobile dans le cas où une halte du véhicule automobile, éventuellement avec libération de porte, s'effectue dans la zone d'intersection des deux zones f d'interception, si bien qu'une correction manuelle peut être effectuée.

12. Procédé suivant l'une des revendications 1 à 11, caractérisé en ce que, lors de l'avancement à l'intérieur de la zone d d'arrêt d'un point (H) d'arrêt, l'écart u2 de mesure possiblement présent et, dès que la valeur v de mesure va au-delà de la valeur du point d'extrémité de la zone d d'arrêt, l'écart u1 de mesure possiblement présent sont réduits en fonction de la distance avancée.

Fig. 1

EP 0 805 953 B1

Fig. 2

$H_n$                                                                                              $H_{n+1}$

Fig. 3

$H_n$   $s_n$                   $f_n$                                        $H_{n+1}$   $s_{n+1}$            $f_{n+1}$

Fig. 4

LB          AM                                                                     $H_{n+1}$

STOP

w      1/2 diff      $w_{corr}$          $s_{n+1}$

diff

EP 0 805 953 B1

14

Fig. 6

EP 0 805 953 B1

**Fig. 6**

LB

$H_m$

STOP

$s_m$

$d_m$

1034 1035 1036 1037 1038 1039 1040 1041 1042 1043 1044 1045 1046 1047 1048 1049 1050 1051 1052 1053 1054

$H_m$ | $s_m = 1045,3$
$d_m = 1042 - 1048,7$

CD

IR

w = 1039     w = 1042

$e_v$     u2     $d_m$     u1     $e_h$

corr

f = 1037,2 - 1053,2

EP 0 805 953 B1